**Europäisches Patentamt**

**European Patent Office**

**Office européen des brevets**

(11) Veröffentlichungsnummer: **0 066 644**
**B1**

(12) **EUROPÄISCHE PATENTSCHRIFT**

(45) Veröffentlichungstag der Patentschrift:
20.03.85

(21) Anmeldenummer: **81104420.5**

(22) Anmeldetag: **09.06.81**

(51) Int. Cl.⁴: **H 02 K 3/28**

(54) Anordnung und Verfahren zum Verschalten der Wicklungsenden der Statorwicklung eines Kleinmotors.

(43) Veröffentlichungstag der Anmeldung:
**15.12.82 Patentblatt 82/50**

(45) Bekanntmachung des Hinweises auf die Patenterteilung:
**20.03.85 Patentblatt 85/12**

(84) Benannte Vertragsstaaten:
**AT CH DE FR IT LI**

(56) Entgegenhaltungen:
**EP - A - 0 017 075**
**DE - A - 2 535 609**
**DE - B - 2 842 119**
**US - A - 2 864 064**
**US - A - 3 772 626**

(73) Patentinhaber: **Siemens Aktiengesellschaft, Berlin und München Wittelsbacherplatz 2, D-8000 München 2 (DE)**

(72) Erfinder: **Deutloff, Norbert, Dipl.-Ing., Steigstrasse 3, D-8702 Thüngersheim (DE)**
Erfinder: **Pieper, Wolfgang, Kirchbühlstrasse 4, D-8700 Würzburg (DE)**
Erfinder: **Voigt, Claus-Dieter, Dipl.-Ing., Eichenstrasse 8, D-8702 Rottendorf (DE)**

### Beschreibung

Die Erfindung bezieht sich auf eine Anordnung und ein Verfahren zum Verbinden der Wicklungsenden der Statorwicklung eines Kleinmotors, insbesondere eines Aussenläufermotors, gemäss Oberbegriff des Patentanspruchs 1; eine derartige Anordnung ist aus der DE-A-2 535 609, Fig. 2, 3 bekannt.

Im bekannten Fall wird bei einem Aussenläufermotor nach der Bewicklung des Stators auf das eine stirnseitig über die Wickelköpfe vorstehende Lagerrohr ein isolierendes Formstück aufgeschoben, das sich mit radial federnden Zungen elastisch gegen das Lagerrohr anlegt. Das Isolierstück ist an seiner dem Wickelkopf zugewandten Seite bereits fertig mit einem Motoranschlusskabel versehen, das in einem Eingangskanal an der Unterseite des Formstückes mittels Widerhaken zugentlastet festklemmbar ist. An der gegenüberliegenden Seite ist das Formstück mit fingerartigen Vorsprüngen versehen, die jeweils elastisch federnde Schenkel aufweisen. Oberhalb der zugentlasteten Halterung des Anschlusskabels sind dessen einzelne Leitungsenden auf der dem Wickelkopf zugewandten Seite des Formstückes vorfixiert. Nach dem Aufsetzen des Formstückes auf das Lagerrohr werden die abisolierten freien Leitungsenden des Anschlusskabels mit den Drähten der Statorwickel verlötet und dann in die Zwischenräume zwischen den elastisch federnden Schenkeln der fingerartigen Vorsprünge eingeklemmt. Nach der Montage und Verschaltung des Formstückes wird lagerschildseitig ein in das Formstück einrastbares Abdeckteil aufgesetzt, das anschliessend mit dem Lagerrohr fest verbunden wird. Das Formstück kann auch mit einer eingeformten Tasche versehen sein, in die ein Thermoschalter eingelegt und durch übergreifende federnde Lappen in seiner Position gehalten werden kann.

Durch die DE-B-1 930 359 ist es weiterhin bekannt, zum Verschalten der Wicklungsenden der Statorwicklung eines Kleinmotors mit den Leitungsenden eines äusseren Anschlusskabels eine mit Leiterbahnen bedruckte Leiterplatte am Kragen einer an der Stirnseite des Statorblechpaketes anliegenden Isolierendscheibe zu befestigen und sowohl die Leitungsenden als auch die Wicklungsenden an bestimmten Punkten der Leiterbahnen der Leiterplatte anzulöten.

Aufgabe der vorliegenden Erfindung ist es, eine Anordnung zum Verbinden der Wicklungsenden der Statorwicklung mit den Leitungsenden eines äusseren Anschlusskabels zu schaffen, die auch bei rauhem Betriebseinsatz alle mechanischen und elektrischen Forderungen erfüllt und trotzdem mit einfacheren Mitteln, insbesondere in vollautomatisch mechanisierbarem Montageablauf, fertigbar ist.

Diese Aufgabe wird bei einer Anordnung der eingangs genannten Art erfindungsgemäss durch die im kennzeichnenden Teil des Patentanspruchs 1 angegebenen Massnahmen gelöst. Die Gegenstände der abhängigen Ansprüche beschreiben vorteilhafte Ausgestaltungen dieser Erfindung. Anspruch 10 ist auf ein Verfahren zur Herstellung der Verbindung gemäss Anspruch 1 gerichtet.

Die erfindungsgemässe Anordnung erlaubt es, nach dem Wickeln des Stators zunächst die bereits mit dem Anschlusskabel bestückte Isolierplatte mechanisch fest, vorzugsweise durch Ultraschall-Nieten, am Kragen der Isolierendscheibe zu befestigen. Durch das Umschlingen der einzelnen Leitungsenden des Anschlusskabels sind einerseits diese Leitungsenden je für sich zugentlastet auf der Isolierplatte fixierbar und andererseits mit ihren zurückgesteckten Enden in Abstand zur Isolierplatte derart positioniert, dass sie auf einfache Weise von den jeweiligen Wicklungsdrähten der Statorwicklung umschlungen und anschliessend durch Tauchlöten in einem Arbeitsgang sicher elektrisch kontaktierbar sind.

Da die Isolierplatte bereits vor dem gegenseitigen Verbinden zwischen den Leitungsenden des Anschlusskabels und den Wicklungsenden der Motorwicklung durch Befestigen am Kragen der Isolierendscheibe in ihrer endgültigen Lage eindeutig und mechanisch fest sowie ohne Notwendigkeit einer vorherigen Montage des Innenrohrs für die Läuferwelle in stirnseitig freier Zugänglichkeit fixierbar ist, kann eine einfache und sichere Kontaktierung der Leitungs- und Wicklungsenden erfolgen. In vorteilhafter Weise ist insbesondere vorgesehen, dass der stirnseitig axial vor der Isolierplatte anzuordnende Lagerschild einstückig an das Innenrohr angeformt ist; dadurch können bei einer Anordnung der eingangs genannten Art, die im bekannten Fall auf die Zuhilfenahme des Innenrohrs als Halterungs- und Justiermittel der zu verlötenden Enden angewiesen ist, Innenrohr und Lagerschild in einem einzigen einfachen Fertigungsschritt ohne Behinderung des Kontaktierungsvorganges zwischen den Leitungs- und Wicklungsenden erst abschliessend montiert werden.

Obwohl die vorzugsweise mit Ausnahme der abisolierten Enden mit PVC-Ummantelung versehenen Leitungsenden des Anschlusskabels in wärmeisolationstechnisch günstiger Weise auf der dem Wickelkopf abgewandten Seite der Isolierplatte geführt gehalten sind, wird durch das gleichzeitig eine gute Zugentlastung gewährleistende Einstecken und anschliessende Zurückstecken der Leitungsenden erreicht, dass diese Leitungsenden für das Tauchlötbad gut zugänglich an der Aussenseite der Isolierplatte vorstehen, was bei einem einfachen Einstecken nicht möglich wäre, da die Leitungsenden des Anschlusskabels auf der dem Wickelkopf zugewandten Seite der Isolierplatte angeordnet wären. Die spezifische Anordnung und Führung der Leitungsenden an der in einfacher Weise mechanisch besonders stabil gehaltenen Isolierplatte erlaubt also gleichzeitig eine wesentliche Montage- bzw. Fertigungsvereinfachung und gleichzeitig eine hohe Betriebssicherheit in mechanischer und elektrischer Hinsicht auch bei längerem und insbesondere rauhem Betriebseinsatz.

In vorteilhafter Weise ist zur Gewährleistung der erforderlichen Isolierfestigkeit, insbesondere bei kurzen Abständen zwischen dem stirnseitigen Lagerschild und der die Leitungsenden haltenden Isolierplatte vorgesehen, dass über die nicht isolierten Verbindungsstellen zwischen den Leitungsenden einerseits und den Wicklungsenden andererseits eine Isolierkappe gestülpt ist. Nach einer ersten Ausgestaltung der Erfindung ist vorgesehen, dass die insbesondere einstückige Isolierkappe nach dem Zurückbiegen der Verbindungen zwischen den Leitungsenden und den Wicklungsenden in die Zwischenräume der Finger insgesamt sowohl über die Verbindungsenden als auch die Finger gestülpt wird. In einer die Montage noch weiter vereinfachenden Weise ist nach einer weiteren Ausgestaltung vorgesehen, dass über die an der Vorderseite der Isolierplatte vorstehenden Leitungsenden und die damit verbundenen Wicklungsenden vor ihrem Biegen gegen die Isolierplatte die vorzugsweise einstückige Isolierplatte gestülpt und dann die Isolierkappe mit den Leitungsenden und Wicklungsenden gegen die Isolierplatte zurückgebogen und an dieser gehalten, insbesondere mittels einer Druckknopfverbindung fixiert wird.

Die Erfindung sowie weitere vorteilhafte Ausgestaltungen werden im folgenden anhand eines schematisch dargestellten Ausführungsbeispiels in der Zeichnung näher erläutert. Darin zeigen:

Fig. 1 in einem Längsschnittbild einen Einphasen-Aussenläufermotor,

Fig. 2 eine lagerschildseitige Draufsicht auf eine vor dem rechten Wickelkopf des Aussenläufermotors gemäss Fig. 1 angeordnete Isolierplatte,

Fig. 3, 4 vergrösserte Detailausschnitte der Isolierplatte gemäss Fig. 2 im Bereich der kammartig mit elastischen Fingern versehenen Randbereiche.

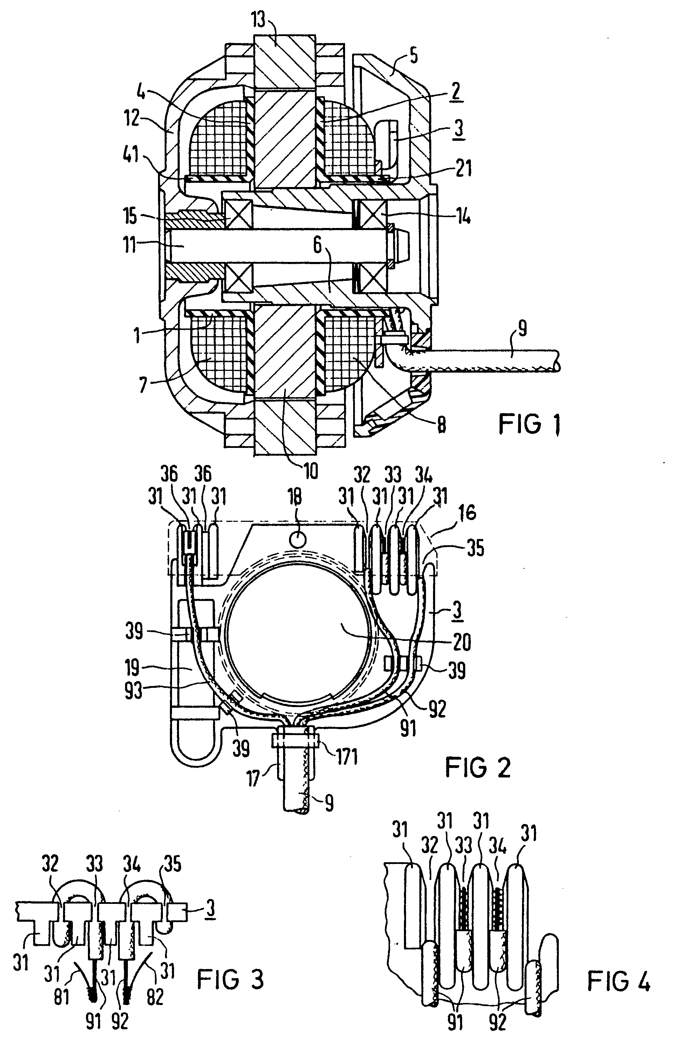

Fig. 1 zeigt in einem Längsschnittbild einen Einphasen-Aussenläufermotor mit einer Läuferglocke 12, die radial aussen das Läuferblechpaket 13 aufnimmt und radial innen über eine Nabe mit einer Läuferwelle 11 fest verbunden ist; die Läuferwelle 11 ist über Lager 14, 15 in einem Innenrohr 6 drehbar gelagert, das seinerseits das bewickelte Ständerblechpaket 10 aufnimmt und an seinem rechten Ende einstückig in einen Lagerschild 5 übergeht. Die linke Stirnseite des Ständerblechpaketes 10 ist gegenüber dem linken Wickelkopf 7 der Ständerwicklung durch eine Isolierendscheibe 4 isoliert, die zusätzlich mit einem axialen Kragen das Innenrohr 6 als auch die mit der Läuferwelle 11 verbundene Nabe der Läuferglocke 12 übergreift. An der rechten Stirnseite des Ständerblechpaketes 10 liegt eine gleiche Isolierendscheibe 2 mit einem das Innenrohr 6 umschliessenden axial vorstehenden Kragen 21 an. Die Isolierendscheibe 2 wird zusätzlich zur Halterung der Isolierplatte 3 mitbenutzt; dazu ist die Isolierplatte 3 stirnseitig vor dem Wickelkopf 8 an dem Kragen 21 der Isolierendscheibe 2, vorzugsweise mittels eines Ultraschall-Nietvorganges, mechanisch befestigt. Durch eine Öffnung des Lagerschildes 5 ist ein äusseres Anschlusskabel 9 zu der Isolierplatte 3 geführt.

Die in Fig. 2 dargestellte Isolierplatte 3 besteht zweckmässigerweise aus einem einstückigen Kunststoff-Spritzgussteil. Sie weist eine innere Öffnung 20 auf, in die das linke Ende des Innenrohrs 6 mit dem einstückig angeformten Lagerschild 5 nach der Befestigung und Montage der Isolierplatte 3 einschiebbar ist. Im Randbereich der Öffnung 20 liegt die Isolierplatte 3 an der Stirnseite des Kragens 21 der Isolierendscheibe 2 an und ist mit dieser, insbesondere durch ein Ultraschall-Schweissen, fest verbindbar. Die Isolierplatte 3 weist an ihrem oberen rechten Randbereich Finger 31 mit entsprechenden Zwischenräumen 32 - 35 und an ihrem linken oberen Randbereich Finger 31 mit Zwischenräumen 36 auf. An der unteren Seite der Isolierplatte 3 ist ein halboffener Kabelkanal 17 eingeformt, in den das äussere Anschlusskabel 9 einlegbar und durch eine aufrastbare Kabelschelle 171 zugentlastet fixierbar ist. Das an dem oberen Rand des Kabelkanals austretende äussere Anschlusskabel 9 teilt sich in freie Leitungsenden 91 - 93 auf, von denen die Leitungsenden 91, 92 zum rechten Randbereich und das Leitungsende 93 zum linken Randbereich der Isolierplatte 3 verlegt sind. Zur Vororientierung der freien Leitungsenden dienen in vorteilhafter Weise an die Isolierplatte 3 mit angespritzte Stützpunkte in Form von elastischen Befestigungsösen 39, in die die Leitungsenden eindrückbar sind. Die Leitungsenden 91, 92 sind zur direkten Verbindung mit Wicklungsenden 81, 82 der Ständerwicklung vorgesehen, während das Leitungsende 93 in Reihenschaltung über einen Thermowächter 19 zu einem weiteren Wicklungsende der Statorwicklung geführt ist. Der Thermowächter 19 ist in einer Tasche der Isolierplatte 3 durch federnde, an die Isolierplatte 3 angeformte Laschen derart festgelegt, dass er mit einer möglichst grossen Oberfläche in gutem Wärmekontakt zum Wickelkopf 8 der zu überwachenden und gegen eine thermische Überlastung zu schützenden Ständerwicklung liegt.

Der Thermowächter ist zweckmässigerweise derart in der Tasche der Isolierplatte 3 mittels angespritzter federnder Laschen fixiert, dass er von der Wicklungsseite der Isolierplatte 3 her vor deren Montage am Kragen 21 in die Tasche eingeschnappt werden kann. Danach können die Anschlussleitungen des Thermowächters, ähnlich wie im Kontaktierungs- und Festlegungsfall der übrigen Leitungs- und Wicklungsenden, in einem Zwischenraum 36 im linken Randbereich festgelegt und kontaktiert werden. In Fig. 2 ist hier eine Crimpbefestigung vorgesehen. Fig. 3 zeigt in einem vergrösserten Detailausschnitt eine Draufsicht auf die obere Kante des mit elastischen Fingern versehenen Randbereichs der Isolierplatte 3. Das auf der dem Wickelkopf 8 abgelegenen Seite der Isolierplatte 3 verlagerte Leitungsende 91 ist zunächst in einer zur Richtung der Finger 31 senkrechten Richtung durch den ersten Zwischenraum 32 zwischen den beiden linken Fingern des rechten Randbereichs zur Rückseite der Isolierplatte 3 eingesteckt und nach rückseitiger Umschlingung des rechten der beiden Finger durch den weiteren Zwischenraum 33 zur Vorderseite der Isolierplatte 3 zurückgesteckt. Auf diese Weise ist erreicht, dass einerseits das freie Leitungsende 91 des Anschlusskabels 9 zugentlastet gelagert und andererseits derart positioniert ist, dass das abisolierte freie Ende des Leitungsendes 91 im wesentlichen senkrecht von der Vorderseite der Isolierplatte 3 absteht und auf einfache Weise, insbesondere in vollautomatischer maschineller Fertigung, mit dem anzuschliessenden Wicklungsende 81 der Statorwicklung z.B. durch Umwickeln und anschliessendes Verlöten, vorzugsweise in einem Tauchlötbad, verbunden werden kann. In gleicher Weise ist auch das andere freie Leitungsende 92 durch einen Zwischenraum 35 der Isolierplatte 3 eingesteckt und durch den weiteren Zwischenraum 34 zurückgesteckt sowie mit einem anderen freien Wicklungsende 82 der Statorwicklung verbunden.

Da sämtliche mit Wicklungsenden der Statorwicklung derartig verbundenen freien Leitungsenden des Anschlusskabels 9 eindeutig positionierbar und zugentlastet festlegbar an der Vorderseite der Isolierplatte 3 von deren kammartig, mit Fingern versehenem Randbereich axial vorstehen, kann durch einfaches Eintauchen der vorstehenden Enden in ein Tauchlötbad in einem einzigen, ebenfalls leicht mechanisierbaren Fertigungsvorgang die endgültige elektrische Lötkontaktierung zwischen den Wicklungsenden der Statorwicklung und den Leitungsenden des Anschlusskabels 9 erfolgen. Dabei sind die zu verlötenden Enden unbehindert vom später erst montierbaren Innenrohr bzw. Lagerschild frei zugänglich.

Nach diesem Lötvorgang werden in zweckmässiger Weise die jeweiligen Verbindungsstellen zwischen den Leitungsenden 91, 92 und den Wicklungsenden 81, 82 gemäss Fig. 4 hochgebogen und in den Zwischenräumen zwischen den Fingern festgelegt. Zur zusätzlichen mechanischen Sicherung und zur zusätzlichen Gewährleistung eines geforderten Isolationsabstandes zwischen den Verbindungsstellen und dem in einem anschliessenden Montagevorgang mit dem in das Statorblechpaket eingeschobenen Innenrohr stirnseitig vor der Isolierplatte 3 in mehr oder weniger grossem axialen Abstand zur Anlage kommenden Lagerschild 5 kann über die Randbereiche gemäss Fig. 2 eine zusätzliche einstückige Isolierkappe 16 aufgesteckt werden, die sowohl die Finger als auch die zurückgebogenen und in die Zwischenräume eingesteckten Verbindungsstellen zwischen den Leitungsenden 91, 92 und den Wicklungsenden 81, 82 abdeckt. Zur Festlegung der vorzugsweise elastisch etwas aufweitbaren Isolierkappe 16 kann ein Rastverschluss 18 dienen, bei dem z.B. in ein korrespondierendes Rastloch an der Oberkante der Isolierplatte 3 nach Erreichen der Endstellung ein entsprechender Rastnocken der Isolierkappe einschnappt.

Nach einer anderen zweckmässigen Ausgestaltung der Erfindung ist vorgesehen, dass eine Isolierkappe bereits vor dem Zurückbiegen der Verbindungsstellen zwischen den Leitungsenden 91, 92 und den Wicklungsenden 81, 82 auf die dann noch axial von der Vorderseite der Isolierplatte 3 abstehenden Verbindungsstellen aufgesteckt und anschliessend die Isolierkappe gegen die Isolierplatte 3 umgelegt und ebenfalls mit einem Rastverschluss fixiert wird; bei diesem Umlegen werden dann gleichzeitig die Verbindungsstellen zwischen den Leitungsenden 91, 92 und den Wicklungsenden 81, 82 in eine zur Vorderseite der Isolierplatte 3 fluchtende Position mitgenommen und dort fixiert.

Ein erfindungsgemässes Verfahren zur Verbindung der Wicklungsenden mit den Leitungsenden mit Hilfe der erfindungsgemässen Anordnung ist durch folgende wesentliche Verfahrensschritte gekennzeichnet:

a) Bewickeln des Ständerblechpaketes unter gleichzeitiger Festlegung einer stirnseitig am Blechpaket anliegenden Isolierendscheibe mit axial vorstehendem, den Wickelkopf zur Läuferwelle bzw. zum Innenrohr isolierenden Kragen,

b) Befestigen der Isolierplatte am Kragen der Isolierendscheibe,

c) Verdrillen der Wicklungsenden der Motorwicklung mit den axial aussen von der Isolierplatte abstehenden, durch Umschlingung der Finger zugentlastet fixierten Leitungsenden des äusseren Anschlusskabels,

d) gegebenenfalls Anschliessen der Anschlussleitungen des vor der Befestigung der Isolierplatte in deren Tasche eingeschnappten Thermowächters mit den entsprechenden Wicklungs- bzw. Leitungsenden,

e) Eintauchen der axial von der Isolierplatte abstehenden Verbindungen in ein Tauchlötbad durch entsprechende Bewegung der Stator-Blechpaket-Wickelanschluss-Einheit,

f) Einsetzen des Innenrohrs mit axial angeformtem Lagerschild in die entsprechende Ständerblechpaket-Bohrung.

**Patentansprüche**

1. Anordnung zum Verbinden der Wicklungsenden (81; 82) der Statorwicklung eines Kleinmotors, insbesondere eines Aussenläufermotors, mit Leitungsenden (91; 92) eines äusseren Anschlusskabels über eine zwischen Wickelkopf (8) und Lagerschild (5) angeordnete Anschluss-Isolierplatte (3), die zumindest in einem äusseren Randbereich kammartig mit, insbesondere elastischen, Fingern (31) versehen ist, in deren Zwischenraum (33) die Leitungsenden festklemmbar sind, dadurch gekennzeichnet, dass die Isolierplatte (3) stirnseitig an einem das Innenrohr (6) zur Aufnahme der Läuferwelle (11) umfassenden axialen Kragen (21) einer an der Stirnseite des Statorblechpaketes (10) anliegenden Isolierendscheibe (2) befestigt und das Anschlusskabel (9) auf der dem Wickelkopf (8) abgewandten Vorderseite der Isolierplatte (3) gehaltert ist und dass zumindest jedes direkt mit einem Wicklungsende (81; 82) zu verbindende freie Leitungsende (91; 92) des Anschlusskabels (9) jeweils in einer zur Richtung der Finger (31) im wesentlichen senkrechten Richtung durch einen ersten Zwischenraum (32 bzw. 35) eingesteckt und nach Umschlingung zumindest eines Fingers (31) durch einen weiteren Zwischenraum (33 bzw. 34) zur Vorderseite der Isolierplatte (3) zurückgesteckt ist.

2. Anordnung nach Anspruch 1, dadurch gekennzeichnet, dass die jeweils aus dem weiteren Zwischenraum (33 bzw. 34) an der Vorderseite der Isolierplatte (3) hervorstehenden Leitungsenden (91; 92) mit den jeweiligen Wicklungsenden (81; 82) durch ein Tauchlötbad verbunden sind.

3. Anordnung nach Anspruch 1 oder 2, dadurch gekennzeichnet, dass die Leitungsenden (91; 92) mit den verbundenen Wicklungsenden (81; 82) auf die Isolierplatte (3) zu zurückgebogen und an dieser gehaltert sind.

4. Anordnung nach einem der Ansprüche 1 bis 3, dadurch gekennzeichnet, dass über die nicht isolierten Verbindungsstellen zwischen den Leitungsenden (91; 92) einerseits und den Wicklungsenden (81; 82) andererseits eine Isolierkappe gestülpt ist.

5. Anordnung nach Anspruch 4, dadurch gekennzeichnet, dass über die bis in die weiteren Zwischenräume (33 bzw. 34) der Isolierplatte (3) zurückgebogenen Verbindungsstellen zwischen den Leitungsenden (81; 82) und den Wicklungsenden (91; 92) eine sowohl die Verbindungsstellen als auch die Finger (31) übergreifende, insbesondere einstückige, Isolierkappe (16) gestülpt ist (Fig. 2).

6. Anordnung nach Anspruch 4, dadurch gekennzeichnet, dass über die an der Vorderseite der Isolierplatte (3) vorstehenden Verbindungsstellen zwischen den Leitungsenden (91; 92) und den Wicklungsenden eine, vorzugsweise einstückige, Isolierkappe (16) gestülpt und die Isolierkappe (16) mit den Verbindungsstellen gegen die Isolierplatte (3) zurückgebogen und an dieser gehalten, insbesondere eingeknöpft (Rastverbindung 18) ist.

7. Anordnung nach einem der Ansprüche 1 bis 6, dadurch gekennzeichnet, dass an der dem Wickelkopf (8) zugewandten Seite an der Isolierplatte (3) ein Thermowächter (19) positioniert ist.

8. Anordnung nach einem der Ansprüche 1 bis 7, dadurch gekennzeichnet, dass die Isolierplatte (3) durch Ultraschall-Nieten mit dem Kragen (21) der Isolierendscheibe (2) verbunden ist.

9. Anordnung nach einem der Ansprüche 1 bis 8, dadurch gekennzeichnet, dass der stirnseitig axial vor der Isolierplatte (3) angeordnete Lagerschild (5) einstückig an das Innenrohr (6) angeformt ist.

10. Verfahren zum Verbinden der Wicklungsenden (81; 82) der Statorwicklung eines Kleinmotors, insbesondere eines Aussenläufermotors, mit den Leitungsenden (91; 92) eines äusseren Anschlusskabels, gekennzeichnet durch folgende aufeinanderfolgende Verfahrensschritte:

a) Bewickeln des Ständerblechpaketes (10) unter gleichzeitiger Festlegung einer stirnseitig am Blechpaket anliegenden Isolierendscheibe (2) mit axial vorstehendem, den Wickelkopf zur Läuferwelle (11) bzw. zum Innenrohr (6) isolierenden Kragen (21),

b) Befestigen einer mit zumindest in einem äusseren Randbereich mit Fingern versehenen Isolierplatte (3) am Kragen (21) der Isolierendscheibe (2),

c) Verdrillen der Wicklungsenden (81; 82) der Statorwicklung mit den axial aussen von der Isolierplatte (3) abstehenden, durch Umschlingung der Finger (31) zugentlastet fixierten Leitungsenden (91; 92) des äusseren Anschlusskabels,

d) gegebenenfalls Anschliessen der Anschlussleitungen des vor der Befestigung der Isolierplatte (3) in deren Tasche eingeschnappten Thermowächters (19) mit den entsprechenden Wicklungs- bzw. Leitungsenden,

e) Eintauchen der axial von der Isolierplatte (3) abstehenden Verbindungen in ein Tauchlötbad durch entsprechende Bewegung der Stator-Blechpaket-Wickelanschluss-Einheit,

f) Einsetzen eines Innenrohrs (6) mit axial angeformtem Lagerschild (5) in die entsprechende Ständerblechpaket-Bohrung.

## Claims

1. An arrangement for connecting the winding ends (81, 82) of the stator winding of a small motor, in particular an external rotor motor, with lead ends (91, 92) of an external connection cable running via a terminal insulating plate (3) arranged between the winding head (8) and the bearing plate (5) and provided, at least in an outer edge zone, with comb-like fingers (31), in particular elastic in nature, in the interspaces (33) of which the lead ends can be clamped, characterised in that the insulating plate (3) is attached at its end to an axial collar (21) which embraces the inner tube (6) for accommodation of the rotor shaft (11), an insulating plate (2) in contact with the end of the stack of stator liminations (10), the connection cable (9) is fixed on the front of the insulating plate (3), which faces away from the winding head (8), and that at least each free lead end (91, 92) of the connection cable (9) to be directly connected to the respective winding end (81, 82) is passed through a first interspace (32, 35) in a direction fundamentally at right angles to the direction of the fingers (31), wrapped around at least one finger (31), and passed back through a further interspace (33, 34) to the front of the insulating plate (3).

2. An arrangement as claimed in Claim 1, characterised in that the lead ends (91, 92), which each project from the further interspace (33, 34) on the front of the insulating plate (3) are connected to the relevant winding ends (81, 82) by a dip solder bath.

3. An arrangement as claimed in Claim 1 or 2, characterised in that the lead ends (91, 92) with the connected winding ends (81, 82) are bent back towards the insulating plate (3) and fixed thereto.

4. An arrangement as claimed in one of Claims 1 to 3, characterised in that an insulating cap is inverted over the non-insulated connection points between the lead ends (91, 92) on the one hand and the winding ends (81, 82) on the other hand.

5. An arrangement as claimed in Claim 4, characterised in that the connection points are bent back into the further interspaces (33, 34) of the insulating plate (3) between the lead ends (81, 82) and the winding ends (91, 92) and covered by an insulating cap (16) which engages over both the connection points and the fingers (31) and in particular is integral (Fig. 2).

6. An arrangement as claimed in Claim 4, characterised in that the connection points which project on the front of the insulating plate (3) between the lead ends (91, 92) and the winding ends are covered by a preferably integral insulating cap (16), and the insulating cap (16) with the connection points is bent back towards the insulating plate (3) and is fixed thereto, in particular pressed (snap connection 18).

7. An arrangement as claimed in one of Claims 1 to 6, characterised in that a heat monitor (19) is positioned on the insulating plate (3) on the side facing the winding head (8).

8. An arrangement as claimed in one of Claims 1 to 7, characterised in that the insulating plate (3) is connected to the collar (21) of the insulating end plate (2) by ultrasonic riveting.

9. An arrangement as claimed in one of Claims 1 to 8, characterised in that the bearing plate (5) arranged at the end axially in front of the insulating plate (3) is moulded with the inner tube (6) as an integral part thereof.

10. A method for connecting the winding ends (81, 82) of the stator winding of a small motor, in particular an external rotor motor, with the lead ends (91, 92) of an external connection cable, characterised by the following consecutive process steps:

a) winding the stack of stator laminations (10) and simultaneously fixing an insulating end plate (2) which contacts the stack of laminations at the end and has an axially projecting collar (21) which insulates the winding head from the rotor shaft (11) and the inner tube (6);

b) attachment of an insulating plate (3) provided with fingers at least in an outer edge zone to the collar (21) of the insulating end plate (2);

c) twisting the winding ends (81, 82) of the stator winding to the lead ends (91, 92) of the external connection cable, which lead ends project axially from the outside of the insulating plate (3) and are fixed so as to be relieved of tension by being wrapped around the fingers (31);

d) possible connection of the connection leads of the heat monitor (19), snapped into the pocket of the insulating plate (3) prior to the attachment thereof, to the corresponding winding ends and lead ends;

e) immersion of the connections which project axially from the insulating plate (3) into a dip solder path by corresponding movement of the stator lamination stack winding terminal unit; and

f) insertion of an inner tube (6) with an axially moulded bearing plate (5) into the corresponding stator lamination stack bore.

**Revendications**

1. Dispositif pour connecter les extrémités (81; 82) de l'enroulement statorique d'un petit moteur, notamment d'un moteur à induit extérieur, aux extrémités (91; 92) de conducteurs d'un câble de raccordement extérieur par l'intermédiaire d'une plaque isolante de raccordement (3), qui est disposé entre un tête de bobinage (8) et un flasque (5) et qui est pourvu d'au moins dans une zone marginale extérieure, de doigts (31), notamment élastiques, formant une sorte de peigne, tandis que les extrémités des conducteurs peuvent être bloquées dans les espaces intercalaires (33) entre ces doigts, caractérisé par le fait que la plaque isolante (3) est fixée frontalement sur un collet axial (21), entourant le tube intérieur (6) servant à loger la roue (11) de l'induit, d'un disque isolant (2) appliqué contre la face fontale du paquet de tôles (10) du stator, et que le câble de raccordement (9) est maintenu sur la face avant de la plaque isolante (3), tournée à l'opposé de la tête de bobinage (8), et qu'au moins chaque extrémité libre (91, 92) d'un conducteur du câble de raccordement (9), qui doit être reliée directement à une extrémité (81, 82) de l'enroulement, est enfichée dans un premier espace intercalaire (32 ou 35), dans une direction essentiellement perpendiculaire à la direction des doigts (31), et, en étant enroulée sur au moins un doigt (31), est enfichée en sens inverse à travers un autre espace intercalaire (33 ou 34) en direction de la face avant de la plaque isolante (3).

2. Dispositif suivant la revendication 1, caractérisé par le fait que les extrémités (91; 92) des conducteurs, qui font saillie respectivement hors de l'autre espace intercalaire (33 ou 34) sur la face avant de la plaque isolante (3), sont reliées aux extrémités respectives (81; 82) de l'enroulement au moyen d'un bain de soudage à immersion.

3. Dispositif suivant la revendication 1 ou 2, caractérisé par le fait que les extrémités (91; 92) des conducteurs ainsi que les extrémités (81; 82), qui sont réunies de l'enroulement sont repliées sur la plaque isolante (3) et sont maintenues sur cette dernière.

4. Dispositif suivant l'une des revendications 1 à 3, caractérisé par le fait qu'un capuchon isolant est emmanché sur les points de liaison non isolés entre les extrémités (91; 92) des conducteurs d'une part et les extrémités (81; 82) de l'enroulement d'autre part.

5. Dispositif suivant la revendication 4, caractérisé par le fait qu'au-dessus des points de liaison, rabattus dans les autres espaces intercalaires (33 ou 34) de la plaque isolante (3), entre les extrémités (81; 82) des conducteurs et les extrémités (91; 92) de l'enroulement, se trouve enfiché un capuchon isolant (16), notamment d'un seul tenant, qui s'engage aussi bien par-dessus les points de liaison que par-dessus les doigts (31) (figure 2).

6. Dispositif suivant la revendication 4, caractérisé par le fait qu'au-dessus des points de liaison, qui font saillie sur la face avant de la plaque isolante (3), entre les extrémités (91; 92) des conducteurs et les extrémités de l'enroulement, se trouve enfiché un capuchon isolant (16), de préférence d'un seul tenant, et que ce capuchon (16) est rabattu, ainsi que les points de liaison, contre la plaque isolante (3) et est maintenu sur cette dernière notamment par boutonnage (liaison à enclinquetage 18).

7. Dispositif suivant l'une des revendications 1 à 6, caractérisé par le fait qu'un thermorupteur est monté sur la plaque isolante (3), sur sa face tournée vers la tête de bobinage (8).

8. Dispositif suivant les revendications 1 à 7, caractérisé par le fait que la plaque isolante (3) est reliée au collet (21) du disque isolant (2) au moyen d'un rivetage ultrasonique.

9. Dispositif suivant l'une des revendications 1 à 8, caractérisé par le fait que le flasque (5), monté axialement sur la face frontale, en avant de la plaque isolante (3), est réalisé par façonnage d'un seul tenant sur le tube intérieur (6).

10. Procédé pour connecter les extrémités (81; 82) de l'enroulement statorique d'un petit moteur, notamment d'un moteur à induit extérieur, aux extrémités (91; 92) des conducteurs d'un câble de raccordement extérieur, caractérisé par lel phases opératoires successives indiquées ci-après:

a) bobinage du paquet (10) de tôles du stator avec fixation simultanée d'un disque isolant (2), appliqué contre la face frontale du paquet de tôles et comportant un collet (21) saillant axialement et isolant la tête de bobinage par rapport à l'arbre (11) de l'induit ou au tube intérieur (6),

b) fixation d'une plaque isolante (3), comportant des doigts au moins dans une zone marginale extérieure, sur le collet (21) du disque isolant (2),

c) torsadage des extrémités (81; 82) de l'enroulement statorique avec les extrémités (91; 92) des conducteurs du câble de raccordement extérieur, qui font saillie axialement à l'extérieur de la plaque isolante (3) et sont fixées en étant exemptes de contrainte de traction par enroulement autour des doigts (31),

d) raccordement éventuel des fils de raccordement du thermo-rupteur (19) fixé par encliquetage brusque, avant la fixation de la plaque isolante (3), dans la poche de cette dernière, aux extrémités correspondantes de l'enroulement et des conducteurs,

e) immersion des liaisons faisant saillie axialement par rapport à la plaque isolante (3), dans un bain de soudure par immersion, grâce à un déplacement correspondant de l'ensemble du paquet de tôles du stator-raccord de bobinage,

f) introduction d'un tube intérieur (6), muni du flasque (5) réalisé axialement par façonnage, dans les perçages correspondants du paquet de tôles du stator.

0 066 644

FIG 1

FIG 2

FIG 3

FIG 4